# EUROPÄISCHE PATENTSCHRIFT

(11) **EP 3 157 276 B1**
(45) Veröffentlichungstag und Bekanntmachung des Hinweises auf die Patenterteilung: **23.05.2018**
(21) Anmeldenummer: 16187784.0
(22) Anmeldetag: 08.09.2016
(51) Int. Cl.: H04W 4/04, H04W 12/02, H04W 4/02, G07C 5/00

(54) **VERFAHREN UND SYSTEM ZUR STEUERUNG VON DATEN**
METHOD AND SYSTEM FOR CONTROLLING DATA
PROCÉDÉ ET SYSTÈME DE CONTRÔLE DE DONNÉES

(30) Priorität: 13.10.2015 DE 102015219783
(43) Veröffentlichungstag der Anmeldung: 19.04.2017
(73) Patentinhaber: Volkswagen Aktiengesellschaft, 38440 Wolfsburg (DE)
(72) Erfinder: Oberschachtsiek, André, 38116 Braunschweig (DE); Pflug, Florian, 38114 Braunschweig (DE); Decke, Hendrik, 38114 Braunschweig (DE)

(56) Entgegenhaltungen:
- EP-A1- 2 736 225
- DE-A1-102011 106 295
- US-A1- 2014 358 394

## Beschreibung

Die vorliegende Erfindung betrifft ein Verfahren für die Steuerung von erfassten Daten von einer Vielzahl von Fahrzeugen, wobei Daten anonymisiert werden und Datenreduktion vorsieht. Die Steuerung besteht zwischen den Einheiten (bspw. Anwendungen, Datenempfänger) jedes Fahrzeuges, zwischen der Vielzahl von Fahrzeugen und einem Backend des Systems, zwischen den Einheiten des Backends und auch möglicherweise zwischen den Einheiten des Backends und mindestens einem externen Diensteanbieter. Die Datenreduktion wird durch die Vermeidung von Übertragung von redundanten Daten bzw. durch die Vermeidung von unnötiger Datenerfassung erreicht. Ferner ist eine verbesserte Genauigkeit der erfassten Daten erfindungsgemäß bewirkt. Die dabei erfassten Daten einer Vielzahl von Fahrzeugen ermöglichen z.B. die aktuelle Wetter- und/oder Verkehrsflussinformation in Zusammenhang mit der konkreten Position jedes Fahrzeugs der Vielzahl von Fahrzeugen zur Verfügung Dritten zu stellen, wobei gleichzeitig die Datenschutzanforderungen (aus Kundensicht und/oder gesetzlich) gewährleistet sind.

DE 10 2014 201 662 A1 beschreibt ein Verfahren zum Erheben von Informationen in einem Fortbewegungsmittel. Dabei sendet ein Fahrzeug bzw. dessen Steuergerät Auswertedaten von Sensoren mittels einer Drahtloskommunikationseinrichtung an ein Backend einer Dateninfrastruktur des Fahrzeugherstellers. Die gesammelten Daten können von einer dritten Partei bzw. deren Datenserver einer zweiten Dateninfrastruktur abgerufen werden. Die einzelne Auswertelogik (die der dritten Partei zugeordnet ist) erfolgt dabei jeweils auf einer virtuellen Maschine des Steuergeräts, die die Daten mit der ermittelten Position des Fahrzeugs assoziiert. Ein stationärer Server konsolidiert die Daten einer Vielzahl von Fahrzeugen und stellt sie der dritten Partei zur Verfügung, wobei Datenschutzrichtlinien zu beachten sind. Als Anwendung des Verfahrens wird z.B. das Sammeln von positionsbezogenen Umweltdaten durch Fahrzeuge für einen Wetterdienst genannt.

DE 10 2011 106 295 A1 beschreibt ein Verfahren zum bidirektionalen Übertragen von Daten zwischen Kraftfahrzeugen und einem Dienstanbieter, bei dem dem Dienstanbieter von Fahrzeugen stammenden Verkehrsdaten bereitgestellt werden, wobei diese ausschließlich über einen Backend-Server bereitgestellt werden. Die Fahrzeuge melden an den Dienstanbieter über einen Rückkanal Verkehrsdaten wie neben Position, Zeitpunkt auch Temperatur und weitere Fahrzeuginformationen. Dabei wird durch eine Backend-Servervorrichtung vor Übermittlung an den Dienstanbieter eine Anonymisierung der Verkehrsdaten vorgenommen.

US 2014/358394 A1 offenbart ein System zur kontinuierlichen Überwachung und Aufzeichnung von Fahrzeug- und Passagierdaten während des Betriebs.

Aus dem Stand der Technik sind somit Lösungen bekannt, bei welchen die Daten von einer Vielzahl von Fahrzeugen an einen Backend geliefert werden. Das Backend anonymisiert diese Daten bevor das Backend diese Daten Dritten anbietet. Die Daten können Messungen/Werte enthalten, z.B. der GPS-Position, der Temperatur-, Regen-, Lichtwerte, die seitens eines Fahrzeuges ermitteln werden können. die mittels Geräte oder Datenaufnehmer erfassten sind, wobei diese Geräte oder Datenaufnehmer an jedem Fahrzeug aufgebaut sind. Die korrekte Zuordnung der Daten zu einem bestimmten Fahrzeug bzw. zu einem bestimmten Ort hängt insbesondere von der korrekten Bestimmung der GPS Position des Fahrzeuges ab. Üblicherweise sind spezifischen Anwendungen (Dienste oder Apps) im Fahrzeug zu implementieren, die eine spezifische Art und Weise von Daten verwenden. Dies wiederum bedeutet, dass jede Anwendung (Dienst oder App) eine eigene GPS Position des Fahrzeuges verwendet und zusammen mit den erfassten Daten überträgt. Somit je nach Toleranzen und/oder Übertragungsfehler, -verzögerungen könnten sich mehrere Schätzungen per Anwendung (Dienst oder App) einer GPS Position für ein einzelnes Fahrzeug ergeben. Dies führt dazu, im besten Fall, dass, wenn alle Schätzungen (von jeder Anwendung - Dienst oder App) einer einzelnen GPS Position gleichkommen, eine gleiche GPS Position unnötigerweise mehrmals per Anwendung (Dienst oder App) übertragt ist.

Ferner problematisch ist dabei beispielweise, dass alle Dienste, die Daten von einer Vielzahl von Fahrzeugen benötigen, nicht die gleiche Genauigkeit an Daten benötigen. Somit wird normalerweise eine unnötige Datenmenge übertragen. Z.B., wenn jeder Dienst eine eigene spezifische Genauigkeit an eine GPS Position benötigt, können sich verschiedene GPS Positionen bei Anwendungen (Dienste oder Apps) an einem Fahrzeug ergeben, obwohl es um ein einzelnes Fahrzeug handelt. Hinsichtlich der Verwendung von dem Begriff Genauigkeit der Daten ist anzumerken, dass sowohl die Taktrate mit dem Daten erfasst werden (Abtastzeit) als auch wie genau die Daten notwendig sind (z.B. in Anbetracht einer angegebenen Fehlertoleranz, Zeittoleranz, Genauigkeitstoleranz i.S. von Dezimalenstellen, etc.) eine jeweilige Rolle für die Genauigkeit der Daten spielt.

Dagegen stellt sich die vorliegende Erfindung die Aufgabe, die Realisierung eines effizienten Verfahrens zur Steuerung von Daten einer Vielzahl von Fahrzeugen im Hinblick auf eine Anonymisierung der Daten und im Hinblick auf eine Reduktion von den zu übertragenden Daten zwischen den Einheiten jedes Fahrzeuges, zwischen der Vielzahl von Fahrzeugen und dem Backend des Systems, zwischen den Einheiten des Backends und zwischen den Einheiten des Backends und möglicherweise mindestens einem externen Diensteanbieter zu gewähren. Die Mehrfacherfassung und -übertragung von mehrfachvewendeten Daten (wie z.B. die GPS Position eines Fahrzeugs) ist erfindungsgemäß vermieden und die Anonymisierung der übertragenen Daten ist jedenfalls erfindungsgemäß gewährleistet.

Sowohl eine individuelle Genauigkeitsanforderung an die zu übertragenden Daten als auch eine entsprechende verbesserte Datenverwaltung ist mittels der vorliegenden Erfindung erreichbar. Somit sind die zu übertragenden Daten nicht unnötig genau für alle Anwendungen (Dienste oder Apps) übertragen.

Der Erfindung liegt das technische Problem zugrunde, ein effizientes Verfahren zur Steuerung von Daten einer Vielzahl von Fahrzeugen zu stellen, um eine weitere Verwendung der Daten gegebenenfalls bei Dritten zur Verfügung Dritten zu stellen, wobei eine Datenanonymisierung gleichzeitig gewährleistet sein muss.

Die Lösung des technischen Problems ergibt sich durch ein Verfahren mit den Merkmalen des Anspruchs 1. Weitere vorteilhafte Ausgestaltungen der Erfindung ergeben sich aus den Unteransprüchen.

Das erfindungsgemäße Verfahren zur Steuerung von Daten eines Fahrzeuges, wobei das Fahrzeug eine Kommunikationseinheit, einen ersten Datenempfänger, einen zweiten Datenempfänger, eine Basisanwendung und mindestens eine Datenanwendung umfasst, wobei das Fahrzeug mit einer Identifikation bezeichnet wird, umfasst: Anfordern von Daten an die mindestens eine Datenanwendung hinsichtlich einer konkreten Position, Erfassen von Basisdaten des Fahrzeuges mittels des ersten Datenempfängers, Übertragen von den Basisdaten des Fahrzeuges an die Basisanwendung, Kodieren der Identifikation des Fahrzeugs, Übertragen von den Basisdaten mit der kodierten Identifikation des Fahrzeugs über die Kommunikationseinheit an einen Basisdienst eines Backends, Erfassen von den angeforderten Daten mittels des zweiten Datenempfängers, Übertragen von den angeforderten Daten an die mindestens eine Datenanwendung, Zuweisen der mindestens einen Datenanwendung mit einer Kennung, Übertragen von den angeforderten Daten mit der zugewiesenen Kennung der mindestens einen Datenanwendung über die Kommunikationseinheit an einen ersten Dienst und dadurch gekennzeichnet, dass die Kennung der mindestens einen Datenanwendung und die kodierte Identifikation des Fahrzeugs eine Anonymisierung der übertragenden angeforderten Daten ermöglicht.

Das Kodieren der Identifikation des Fahrzeugs kann in dem Fahrzeug mittels einer eigenen Verarbeitungseinheit erfolgen. Alternativ oder ergänzend kann das Kodieren des Fahrzeugs außerhalb des Fahrzeugs erfolgen, z.B. in einem Backend, wobei die kodierte Identifikation des Fahrzeugs an das Fahrzeug nach dem Kodieren übertragen wird. Das Zuweisen der mindestens einen Datenanwendung mit einer Kennung kann analog in dem Fahrzeug erfolgen. Alternativ oder ergänzend kann das Zuweisen der mindestens einen Datenanwendung außerhalb des Fahrzeugs erfolgen, z.B. in einem Backend, wobei die zugewiesene Kennung an die Datenanwendung nach dem Zuweisen übertragen wird.

Darüber hinaus kann das Anfordern von Daten an die mindestens eine Datenanwendung auf Antrag des ersten Diensts an den Basisdienst des Backends erfolgen, wobei das Anfordern Vorgaben an die Genauigkeit und/oder an die Übertragung von den angeforderten Daten und/oder Vorgaben an die Genauigkeit und/oder an die Übertragung von den Basisdaten umfassen kann und wobei die angeforderten Daten und/oder die Basisdaten nach den angeforderten Vorgaben erfassen und übertragen werden können.

Der erste Datenempfänger könnte ein GPS Empfänger sein und die Basisdaten könnten GPS Positionsdaten sein. Andere Datenempfängerarten, aus denen die Position eines Fahrzeuges hergeleitet werden kann, sind nicht ausgeschlossen. Anzumerken ist, dass die genannten Basisdaten nicht nur auf Positionsdaten zu begrenzen sind. Anders ausgedrückt, weitere Daten, nicht nur Positionsdaten, die mehrfach aus mehreren Anwendungen eines Fahrzeugs zu übertragen wären, können nur einmalig durch die Basisanwendung jedes Fahrzeug erfindungsgemäß übertragen werden. Somit ist eine effiziente Übertragung von Daten zwischen einem Fahrzeug und dem Backend erreicht. Der zweite Datenempfänger könnte beispielweise einen Temperatur-, Regen oder Tageslichtsensor enthalten. Andere Arten von Datenempfänger sind nicht ausgeschlossen.

Ferner kann ein Bestimmen anhand der erfassten Basisdaten des Fahrzeuges erfolgen, dass das Fahrzeug sich innerhalb eines vordefinierten Bereichs in Bezug auf eine konkrete Position befindet, wobei das Anfordern von Daten an die mindestens eine Datenanwendung nur erfolgen kann, wenn bestimmt wird, aufgrund den erfassten Basisdaten des Fahrzeuges, dass das Fahrzeug sich innerhalb des vordefinierten Bereichs in Bezug auf die konkrete Position befindet. In diesem Sinn ist die Anforderung an eine mindestens eine Datenanwendung nur getriggert in Verbindung mit der konkreten (angeforderten) Position. Die Basisdaten jedes Fahrzeugs können in einer Zuordnungstabelle, die in dem Basisdienst des Backends integriert sein kann, gespeichert werden. Somit, wenn Informationen (Wetter, Verkehrsfluss, etc...) hinsichtlich einer konkreten Position benötigt werden, ist eine Anfrage (bzw. ein Antrag) seitens dem Anforderer (z.B. ein externer Dienst) an den Basisdienst des Backends ausreichend, um zu bestimmen, welche Fahrzeuge sich innerhalb eines vordefinierten Bereichs befinden, um die benötigten Informationen zu bekommen. Der vordefinierte Bereich kann von dem Anforderer selbst und/oder von dem Basisdienst des Backends eingestellt werden (abhängig zum Beispiel von der Anzahl und/oder Verfügbarkeit von registrierten Fahrzeugen und/oder registrierten Diensten oder Apps).

Auf diese Weise sind unnötige Datenübertragungen zwischen einer Datenanwendung des Fahrzeuges und dem Backend vermieden, wenn ein Fahrzeug sich nicht in einer bestimmten Position befindet. Das Bestimmen der Position jedes Fahrzeuges kann durch eine periodische Anfrage des Backends an jedes registrierte Fahrzeug und/oder durch eine Anfrage des Backends auf Anforderung/Antrag eines Dienstes und/oder durch eine automatische Zusendung der Positionsdaten des Fahrzeuges mittels der Basisanwendung jedes Fahrzeuges erfolgen, wenn das Fahrzeug einen vordefinierten Bereich im Vergleich zur letzten gesendeten Positionsdaten an das Backend verlassen hat. Die Positionsdaten jedes Fahrzeuges können in einer Zuordnungstabelle gespeichert werden. Alternativ oder ergänzend kann das Anfordern von Daten an die mindestens eine Datenanwendung eines Fahrzeugs auch unabhängig von der Position des Fahrzeuges erfolgen. Somit kann ein Anforderer Daten eines Fahrzeuges unabhängig von der Position des Fahrzeugs bekommen.

Analog kann das Übertragen von Basisdaten an die Basisanwendung des Fahrzeuges nur erfolgen, wenn bestimmt wird, aufgrund den erfassten Basisdaten des Fahrzeuges, dass das Fahrzeug sich innerhalb des vordefinierten Bereichs in Bezug auf die konkrete Position befindet. Somit ist eine effiziente Übertragung von Daten innerhalb des Fahrzeuges erreicht.

Das Erfassen von Daten mittels des zweiten Datenempfängers kann genauso nur erfolgen, wenn bestimmt wird, aufgrund der erfassten Basisdaten des Fahrzeuges, dass das Fahrzeug sich innerhalb des vordefinierten Bereichs in Bezug auf die konkrete Position befindet. Somit ist eine effiziente Erfassung von Daten seitens des Fahrzeuges erreicht.

Das Verfahren kann ein Registrieren der mindestens einen Datenanwendung mit dem Basisdienst des Backends umfassen, wobei das Übertragen von den angeforderten Daten mit der zugewiesenen Kennung der mindestens einen Datenanwendung über eine Kommunikationseinheit an einen ersten Dienst nur mittels des Basisdienst des Backends erfolgt. Somit ist eine zentralisierte Steuerung der Daten ermöglicht. Anders ausgedrückt, die erfassten Daten werden an alle anderen Dienste oder Apps innerhalb des Backends selbst oder an anderen Dienste oder Apps von externen Diensteanbietern - Diensteanbieter, die sich außerhalb des Backends befinden - nur durch den Basisdienst des Backends bereitgestellt. Alternativ oder ergänzend können Dritten (die oben genannten externen Diensteanbieter) unmittelbaren Zugriff an die erfasste Daten haben, immer nur wenn die erfasste Daten ausreichend kodiert/verschlüsselt sind derart, dass die Quelle der Daten geschützt ist.

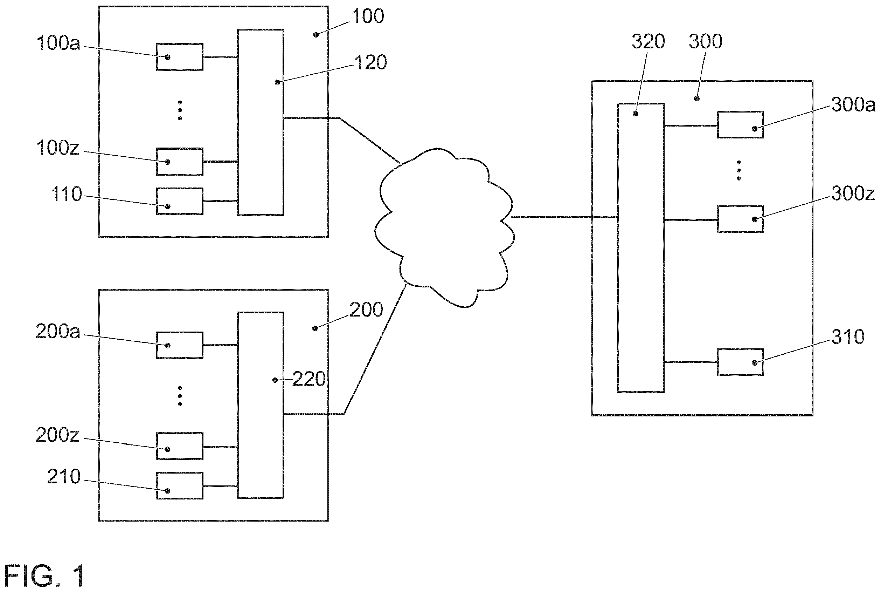

Die Kommunikation zwischen einem Fahrzeug und dem oben beschriebenen Backend erfolgt über eine Dateninfrastrukturwolke, beispielsweise Internet, WLAN, Bluetooth und/oder ein Mobilfunknetz. Das Fahrzeug ist mit einer entsprechenden Kommunikationseinheit (siehe 120, 220, ... in Fig. 1) ausgestattet, um die Kommunikation seitens des Fahrzeuges zu ermöglichen. Entsprechend ist das Backend mit einer Kommunikationsschnittstelle (siehe 320 in Fig. 1) ausgestattet. In diesem Zusammenhang, kann zumindest eine Genehmigungs- , Ermächtigungs- , Berechtigungs- , Autorisierungs- , Authentifizierungs- , und/oder Verschlüsselungs-Technologie (z.B. basiert auf Near-Field Communication (NFC), RFID, Austausch von digitalen Schlüssel und/oder Zertifikaten, PKI, PGP, etc.) verwendet werden, um die Sicherheit von Datenübertragungen zwischen den Einheiten des gezeigten System zu verbessern.

Das Erfassen von angeforderten Daten mittels des oben beschriebenen zweiten Datenempfängers und/oder das Erfassen von Basisdaten mittels des oben beschriebenen ersten Datenempfängers können auch periodisch erfolgen. Somit kann eine Erfassung von Daten und/oder Basisdaten seitens eines Fahrzeugs unabhängig von einem ausdrücklichen Antrag erfolgen.

Das Übertragen von den angeforderten Daten des zweiten Datenempfängers an die mindestens eine Datenanwendung kann auch periodisch erfolgen. Somit kann eine Übertragung von Daten innerhalb eines Fahrzeugs unabhängig von einem ausdrücklichen Antrag erfolgen. Auf diese Weise kann die Datenanwendung des Fahrzeuges auf dem neuesten Stand sein und aktuelle Daten dem Backend schneller bereitstellen, wenn z.B. einen ausdrücklichen Antrag erfolgt.

Das Übertragen von den angeforderten Daten (Daten einer Datenanwendung und/oder Basisdaten einer Basisanwendung) eines Fahrzeuges kann an das Backend periodisch erfolgen. Somit kann eine Übertragung von Daten und/oder Basisdaten eines Fahrzeuges unabhängig von einem ausdrücklichen Antrag erfolgen. Auf diese Weise kann ein Backend auf dem neuesten Stand sein und aktuelle Daten Dritten (z.B. externe Diensteanbieter) schneller bereitstellen.

Anders ausgedrückt, Übertragungs- und Erfassungsraten können selbständig nach dem jeweiligen Bedarf und/oder wegen höhen Kommunikationseinschränkungen eingestellt werden.

Ferner kann man die Daten analog auf dieselbe Weise aus einer Vielzahl von Fahrzeugen steuern, wobei jedes Fahrzeug aus der Vielzahl von Fahrzeugen mindestens eine Kommunikationseinheit, einen ersten Datenempfänger, einen zweiten Datenempfänger, eine Datenanwendung und eine Basisanwendung umfasst.

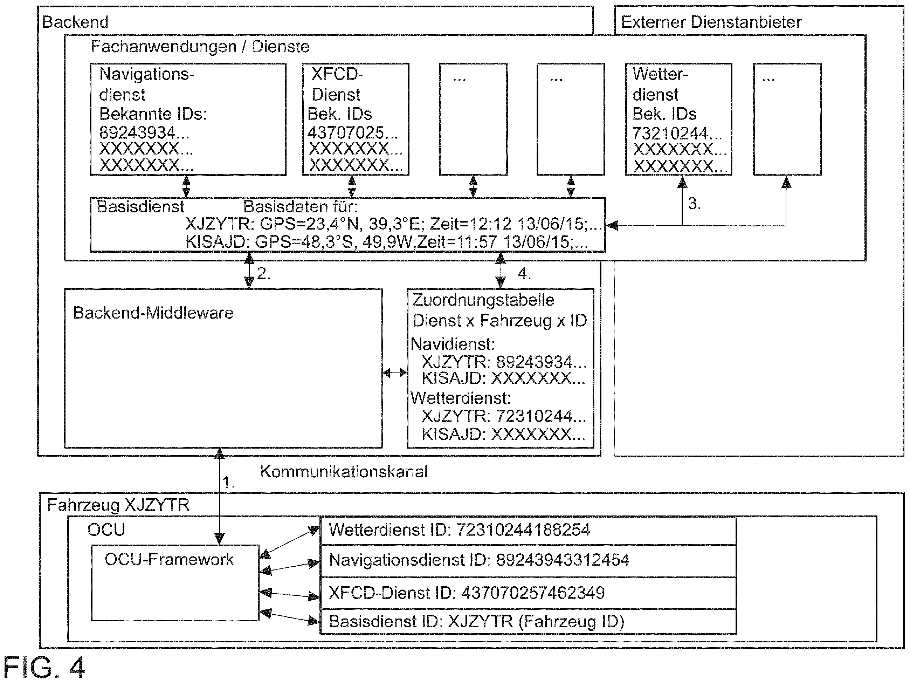

Das Registrieren eines spezifischen Fahrzeugs (aus einer Vielzahl von Fahrzeugen) mit dem Backend umfasst das Zuordnen/Zuweisen einer eindeutigen Identifikation (ID) für das spezifische Fahrzeug (z.B. siehe Fig. 4 ID: XJZYTR für ein erstes Fahrzeug).

Das Registrieren einer Datenanwendung (eines spezifischen Fahrzeugs) mit dem Backend umfasst das Zuordnen/Zuweisen einer eindeutigen Kennung für die Anwendung (z.B. siehe Fig. 4 Wetterdienst ID: 72310244188254 für die Anwendung Wetterdienst).

Anzumerken ist, dass die Begriffe Anwendung, Dienst oder App als Äquivalente zu berücksichtigen sind. Sie sind allgemein bekannte Begriffe, um eine installierte Software in einem System zu beschreiben. Ein Dienst ist als eine Anwendung oder eine App zu sehen, wobei der Dienst nicht im Vordergrund läuft.

Weitere vorteilhafte Ausgestaltungen werden nachfolgend anhand der in den Zeichnungen dargestellten Ausführungsbeispiele, auf welche Ausführungsbeispiele generell jedoch nicht insgesamt beschränkt sind, näher erläutert.

Fig. 1 zeigt eine schematische Ansicht eines Systems mittels dem Daten zwischen einer Vielzahl von Fahrzeugen (nur ein erstes Fahrzeug 100 und ein zweites Fahrzeug 200 sind beispielsweise gezeigt) und eine Backend-Sensorvorrichtung 300 auf, nachfolgend Backend 300, übertragen werden. Unter Daten können fahrzeugseitig und backendseitig Daten verstanden werden. Unter Fahrzeugdaten bzw. Daten aus dem beispielsweise Fahrzeug 100 können beispielsweise GPS-, Temperatur-, Regen- oder Tageslichtwerte verstanden werden, die mit dem Fahrzeug 100 einbezogen sind.

Das gezeigte System weist vorteilhaft ein Backend 300, wobei das Backend 300 eine Kommunikationseinheit 320, eine Vielzahl von Diensten 300a bis 300z und einen Basisdienst 310 umfasst.

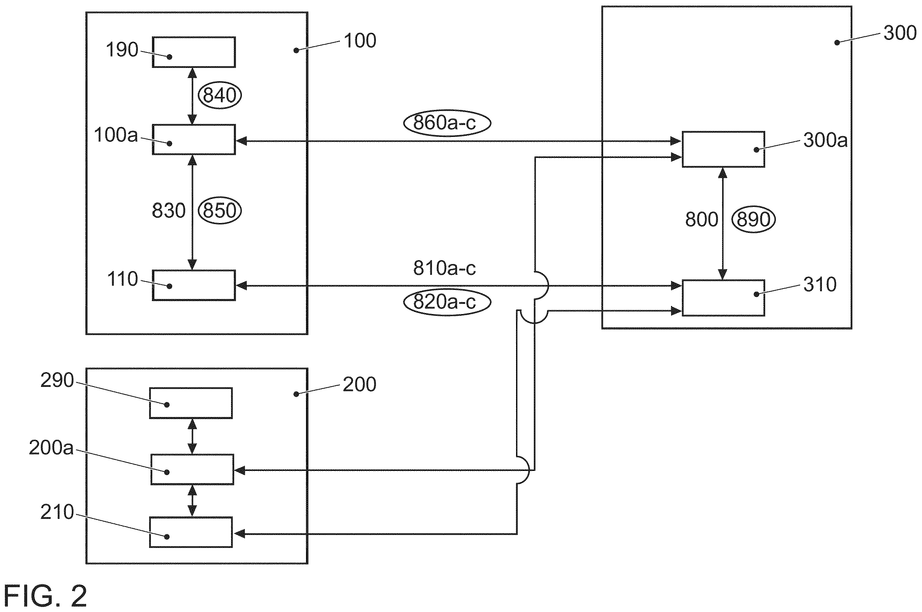

Anzumerken ist, dass die in jedem Fahrzeug mindestens erster Datenempfänger und mindestens zweiter Datenempfänger 190, 290, etc. (wie im Fig. 2 hingegen gezeigt wird) aus Gründen der Übersichtlichkeit in der Fig. 1 nicht gezeigt sind.

Fig. 2 zeigt eine schematische Ansicht der Übertragung von Daten (fahrzeugseitig und backenseitig) nach der vorliegenden Erfindung zwischen zwei Fahrzeugen 100, 200 und einem Backend 300, wo die erfindungsgemäß effizienten Datenübertragungsschritten mit einem Kreis markiert sind (siehe 840, 850, 860a-c, 820a-c und 890). Anzumerken ist, dass die jeweiligen Kommunikationseinheiten 120, 220, 320, etc. (wie im Fig. 1 hingegen gezeigt wird) aus Gründen der Übersichtlichkeit in der Fig. 2 nicht gezeigt sind. Anzumerken ist auch, dass der im Backend dargestellte Dienst 300a auch in einem externen Diensteanbieter implementiert werden kann und erfindungsgemäß auf die Daten der Vielzahl von Fahrzeugen zugreifen kann.

Jede Anwendung in jedem Fahrzeug könnte mit einem entsprechenden Dienst des Backends und/oder eines externen Diensteanbieter unmittelbar registriert werden, um eine Kopplung mit einem entsprechenden Dienst zu ermöglichen. Alternativ oder ergänzend könnte jede Anwendung in jedem Fahrzeug mit dem Basisdienst des Backends registriert werden. Somit ist eines Registrierungsverfahren zentralisiert.

Wie in der Fig. 2 vereinfacht dargestellt, eine unmittelbare Kommunikation (Datenanforderung und -übertragung) für die spezifischen Daten einer Datenanwendung (bis auf die Positionsdaten des jeweiligen Fahrzeugs) erfolgt zwischen der Wetter Anwendung 100a, 200a jedes Fahrzeuges und dem Wetterdienst 300a - der die Wetterdaten benötigt bzw. angefordert hat (siehe Schritt 860a-c). Ferner findet eine unmittelbare Kommunikation (Datenanforderung und - übertragung) für zumindest die Positionsdaten des jeweiligen Fahrzeugs zwischen der Basisanwendung 110, 210 jedes Fahrzeuges und dem Basisdienst 310 des Backends 300 statt (siehe Schritt 820a-c).

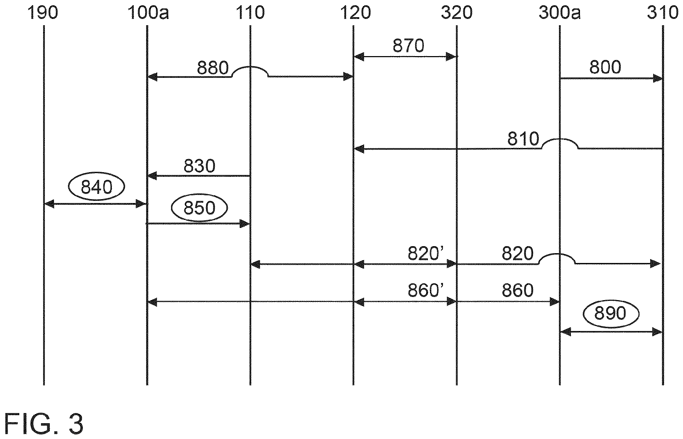

Fig. 3 zeigt einen schematischen Ablaufplan hins. der Erfassung und Übertragung von Daten nach der vorliegenden Erfindung.

Mit Bezug auf Fig. 3 initiiert 800 beispielsweise ein Wetterdienst 300a (der in dem in Fig. 2 gezeigten Backends 300 und/oder in einem externen Diensteanbieter integriert sein kann) eine Anforderung/einen Antrag von Daten von dem Basisdienst 310 des Backends 300. Vorausgesetzt, dass eine Miteinander-Registrierung/Kopplung erfolgt hat, könnte ein Wetterdienst 300a auch mit einer Datenanwendung eines Fahrzeuges unmittelbar kommunizieren.

Eine Registrierung kann zum Beispiel von zumindest einem Fahrzeug unmittelbar mit dem externen Diensteanbieter derart erfolgen, dass die Anforderung/der Antrag des externen Diensteanbieters an Daten unmittelbar von dem zumindest einen Fahrzeug (bzw. von seiner registrierten Anwendungen) übertragen wird. Jedenfalls können spezifischen Anforderungen an die Genauigkeit der aufzunehmenden Daten, beispielsweise die Genauigkeit (nämlich Zeittoleranz, -intervall zwischen Datenaufnahmen, Zeittoleranz, -intervall zwischen übertragenden Daten aus verschiedenen Anwendung/Fahrzeugen, Dezimalenstellen, etc.) der GPS Position, der Temperatur-, der Regen- und/oder der Tageslichtwerte im Rahmen der Anforderung angegeben werden.

Auf Antwort auf diese Anforderung 800, verarbeitet der Basisdienst 310 des Backends 300 diese Anforderung und leitet eine verarbeitete Anforderung von der jeweiligen Basisanwendung 110, 210, etc. des jeweiligen Fahrzeuges weiter 810, dessen jeweiligen Wetter Apps mit dem Backend 300 registriert wurden.

Eine Registrierung zwischen den entsprechenden Anwendungen (z.B. Wetter App 100a, Verkehrsinformation App 100z) umfasst das Zuweisen/Zuordnen einer eindeutigen Kennung für den/die konkreten/- Dienst oder App und das Zuordnen/Zuweisen einer eindeutigen Identifikation (ID) für das konkrete Fahrzeug. Die Erzeugung einer eindeutigen Identifikation (ID) für jedes Fahrzeug kann sich durch einen Zufallszahlgenerator - beispielsweise auf die Fahrzeugidentifikationsnummer ("Vehicle Identification Number" - VIN) basiert - erzeugt werden. Dieser Registrierungsschritt kann am Anfang des Verfahrens erfolgen (wie im Fig. 3 als 870 und 880 dargestellt) oder z.B. nach den/der oben genannten Antrag/Anforderung von Daten 800 oder nach der oben genannten Weiterleitung des/der Antrags/Anforderung von Daten 810. Andere Reihenfolgen sind nicht ausgeschlossen.

Anzumerken ist, dass alle möglichen internen Kommunikationen innerhalb des Backends 300, nämlich zwischen den Einheiten 320, 300a und 310 aus Gründen der Übersichtlichkeit nicht gezeigt sind.

Gemäß dieses/dieser Antrags/Anforderung von Daten wird die jeweilige Basisanwendung in jedem registrierten Fahrzeug die GPS Position und die angeforderten Daten (z.B. Temperatur-, Regen- und/oder Tageslichtwerte) an die entsprechenden Datenanwendungen, die in jedem Fahrzeug registriert sind und zur Verfügung stehen, anfordern 830. Die entsprechenden Datenanwendungen werden die angeforderten Daten an die entsprechenden Datenaufnehmer/Datenempfänger 190, die in jedem Fahrzeug aufgebaut sind, weiter anfordern 840. Alternativ oder ergänzend kann die jeweilige Basisanwendung die GPS Position und die angeforderten Daten (z.B. Temperatur-, Regen- und/oder Tageslichtwerte) unmittelbar an die entsprechenden Datenaufnehmer/Datenempfänger 190 anfordern (nicht gezeigt aus Gründen der Übersichtlichkeit). Diese Datenaufnehmer/Datenempfänger 190 können beispielweise einen Temperatur-, Regen oder Tageslichtsensor enthalten. Andere Arten von Datenaufnehmer/Datenempfänger sind nicht ausgeschlossen. Der/Die oben beschriebene Antrag/Anforderung von Daten 800 können einen/eine selbständig periodische Antrag/Anforderung von Daten 830 triggern und/oder beide Anträge/Anforderungen 800 und 830 können gekoppelt sein.

Die Übertragung von Daten und Anforderungen zwischen den Datenaufnehmern/ Datenempfänger (z.B. Temperatursensor 190) und den Datenanwendungen (z.B. Wetter App 100a) sowie zwischen der Basisanwendung (z.B. 110) und den Datenanwendungen (z.B. Wetter App 100a) oder zwischen der Basisanwendung (z.B. 110) und den Datenaufnehmern/Datenempfänger (z.B. Temperatursensor 190) kann periodisch erfolgen und/oder je nach den angegebenen Vorgaben in dem/der oben genannten Antrag/Anforderung 800 von dem Wetterdienst 300a. Mit anderen Worten ausgedrückt, periodisch oder auf Bedarf von dem Dienst, der die Daten angefordert hat und/oder auf Bedarf von anderen involvierten Einheiten in dem gezeigten System, z.B. wegen Kommunikationseinschränkungen. Anders ausgedrückt, das Backend, ein externer Diensteanbieter und/oder ein konkreter Dienst selbst von dem Backend und/oder von einem externen Diensteanbieter meldet den Bedarf (z.B. wegen Netz-Verfügbarkeit, -Einschränkungen), welche Daten und wie oft benötigt werden. Dieser Bedarf könnte durch das Backend, den externen Diensteanbieter und/oder den konkreten Dienst selbst eingestellt/angepasst werden. Auf diese Weise wird beispielweise ein unnötig schneller Datenaufnahmetakt vermieden. Demzufolge wird eine unnötige Übertragung von Daten effektiv reduziert. Alternativ oder ergänzend können alle Übertragungen von Daten und Anforderungen mit einem gleichen einstellbaren Zeitraster für alle Dienste erfolgen. Diese Einstellung könnte durch das Backend, den externen Diensteanbieter und/oder den konkreten Dienst selbst gesteuert werden.

Nachdem die jeweilige Basisanwendung jedes Fahrzeuges die angeforderten Daten bekommen hat, überträgt die jeweilige Basisanwendung jedes Fahrzeuges die GPS Position mit weiteren Metainformationen, wie zum Beispiel ein erster Zeitstempel, an den Basisdienst 310 des Backends 300, siehe Schritt 820. Dadurch kann beispielsweise eine Einheit (die im Backend integriert werden kann) jedes Fahrzeug mittels einer Auswertung der angegebenen GPS Position mit einer einstellbaren Positionstoleranz, -bereich zu einer konkreten Position zuordnen.

Nachdem die jeweilige Datenanwendung (Dienst oder App), z.B. Wetter App 100a, jedes Fahrzeuges die angeforderten Daten (von zumindest einen Datenaufnehmer) bekommen hat, überträgt die jeweilige Datenanwendung die erfassten Daten mit weiteren Metainformationen, wie zum Beispiel einen zweiten Zeitstempel und/oder mit der zugewiesenen Kennung der Anwendung an z.B. den Wetterdienst 300a (der Dienst, der die Daten angefordert hat), siehe Schritt 860. Alternativ oder ergänzend können registrierte Dienste Daten bekommen, obwohl sie diese nicht ausdrücklich angefordert haben (z.B. wenn wichtige Informationen wie Gewitter, Geistfahrer und/oder ein schwerer Unfall zu verteilen wären). Da die entsprechende GPS Position mittels der Basisanwendung des jeweiligen Fahrzeuges übertragen wird, wird eine Übertragung der GPS Position per Anwendung wirksam vermieden. Durch die zugewiesene Kennung der Datenanwendung ist die Anonymisierung der Daten gewährleistet. Auf jeden Fall, eine Einheit (die im Backend integriert werden kann) kann jedes Fahrzeug mittels einer Auswertung der jeweiligen angegebenen Identifikation (ID) des Fahrzeuges und der Kennung der Datenanwendung und/oder durch eine Auswertung der ausgetauschten Metainformationen zuordnen. Alternativ oder ergänzend kann die zugewiesene Kennung einer Datenanwendung aus der angegebenen Identifikation (ID) des Fahrzeuges hergeleitet werden oder umgekehrt derart, dass eine Zuordnung der vorhandenen Dienste oder Apps in einem bestimmten Fahrzeug ermöglicht ist. Alternativ oder ergänzend kann die Zuordnung der vorhandenen Dienste oder Apps in einem bestimmten Fahrzeug durch das Senden von zusätzlichen Parametern als weitere Metainformationen und/oder durch eine Wahrscheinlichkeit-Auswertung anhand des o.g. ersten und zweiten Zeitstempel (z.B. wenn beide Zeitstempel sich innerhalb eines bestimmten einstellbaren Zeitintervalls befinden) erfolgen so, dass eine bestimmte Kennung zu einer bestimmen Dienst oder App in einem bestimmten Fahrzeug zugeordnet werden kann.

Mittels des Zuweisens einer eindeutigen Kennung für jede Datenanwendung ist eine Anonymisierung der Daten erfindungsgemäß gewährleistet. Mittels beispielsweise einer ersten Zuordnungstabelle, die in dem Basisdienst des Backends integriert werden kann, kann das Backend die Daten und die Quelle der Daten (welches Fahrzeug und/oder welche Datenanwendung eines Fahrzeugs) nachverfolgen.

Mittels der oben beschriebenen ersten und zweiten Zeitstempel und mittels beispielsweise einer zweiten Zuordnungstabelle, die in dem Basisdienst des Backends integriert werden kann, kann das Backend diese übertragenden Daten nachverfolgen und gegebenenfalls korrelieren. Dies kann durch die Definition einer bestimmten einstellbaren Zeittoleranz, -intervall zwischen den ersten und den zweiten Zeitstempel erfolgen. Somit kann auch eine bestimme Kennung zu einer bestimmen Dienst oder App in einem bestimmten Fahrzeug zugeordnet werden.

Alternativ oder ergänzend können die erste und die zweite oben genannten Zuordnungstabellen in einer einzigen Tabelle zusammengeführt werden.

Alternativ oder ergänzend können die Identifikation des jeweiligen Fahrzeuges bzw. die kodierte Identifikation des jeweiligen Fahrzeuges in jeder Übertragung aus der Basisanwendung samt der GPS Position. Analog können die Identifikation des jeweiligen Fahrzeuges bzw. die kodierte Identifikation des jeweiligen Fahrzeuges in jeder Übertragung aus der jeweiligen Datenanwendung samt der angeforderten Daten, Kennung und dem zweiten Zeitstempel gesendet werden.

Darüber hinaus erfolgt auch eine verbesserte Übertragung von den GPS Positionsdaten und von den Fahrzeugdaten (die oben genannten Daten, die mittels des mindestens zweiten Datenempfängers erfassen werden) zwischen z.B. einem Wetterkartendienst (300a) und dem Basisdienst/App (310) des Backends 300 (Schritt 890) je nach Bedarf, Vorgaben und/oder Einstellungen. Jeder registrierter Dienst 300a-300z (die im Backend 300 selbst und/oder in zumindest einem externen Diensteanbieter implementiert werden können) bekommt erfindungsgemäß nur einmal die Positionsdaten mittels des Basisdienst/App (310) des Backends 300, die die einzelne konkrete Position eines Fahrzeugs bestimmen.

Fig. 4 zeigt eine schematische Ansicht des erfindungsgemäßen Systems. Erfindungsgemäß werden Daten zwischen einer Vielzahl von Fahrzeugen (nur ein erstes Fahrzeug ist beispielsweise gezeigt) und einem Backend über mindestens eine Dateninfrastrukturwolke effizient übertragen.

Wie gezeigt, beispielweise kann ein Wetterdienst (siehe Fig. 4, ID 73210244xxx) eines externen Diensteanbieter und/oder des Backends selbst auf den sogenannten Basisdaten (z.B. GPS-Positionsdaten eines Fahrzeuges) zugreifen, wobei diese Basisdaten mittels der zugeordneten/zugewiesenen kodierten Identifikation (ID) des Fahrzeuges anonymisiert sind. Ferner sind die jeweiligen (registrierten) Datenanwendungen (Dienste oder Apps) in jedem Fahrzeug (die mittels der zugeordneten/zugewiesenen Kennung anonymisiert werden) und das Fahrzeug selbst nur durch die gezeigte Zuordnungstabelle nachverfolgbar.

Jedes Fahrzeug wird mit einer eindeutigen kodierten Identifikation (ID) (z.B. "XJZYTR" für ein erstes Fahrzeug) registriert. Jeder Dienst oder App, die in jedem Fahrzeug vorhanden ist, wird mit einer eindeutigen Kennung (siehe z.B. "72310244188254" für einen Wetterdienst ID in dem ersten Fahrzeug mit ID "XJZYTR") registriert. Wie dargestellt, alle Dienste oder Apps, die in jedem Fahrzeug vorhanden sind (außer der Basisdienst od. Basisapp des Fahrzeuges), sind mit einer Kennung registriert, die sich mit der Identifikation (ID) des Fahrzeugs nicht korrelieren lassen. Alternativ oder ergänzend könnten sich die Kennungen der vorhandenen Diensten oder Apps eines Fahrzeuges durch eine Kodierung/Verarbeitung der Identifikation (ID) des Fahrzeugs doch korrelieren lassen. Vorausgesetzt ist, dass diese Kodierung/Verarbeitung nur das Backend nachverfolgen kann.

Zumindest ist eine Zuordnungstabelle im Backend vorgesehen. Diese Zuordnungstabelle könnte in dem Basisdienst des Backends integriert sein. Die gezeigte Zuordnungstabelle kann die Vielzahl von Fahrzeugen und die vorhandenen Dienste oder Apps - die in jedem Fahrzeug vorhanden sind - miteinander verknüpfen. Diese Zuordnung von vorhandenen Diensten oder Apps per Fahrzeug ist - zusätzlich zu dem Fahrzeug selbst - nur im Backend bekannt. Auf dieser Weise ist eine Art von virtuellen Fahrzeugen in der Zuordnungstabelle zu erkennen, wobei eine Anonymisierung gegenüber Dritten auf jeden Fall gewährleistet ist.

Das Backend kann Dienste oder Apps (z.B. Navigationsdienst, Wetterdienst, etc.) enthalten, die Daten aus der Vielzahl von Fahrzeugen anfordern und externen Diensteanbieter anbieten. Die Anforderung von Daten erfolgt durch einen vorgesehenen Basisdienst oder -app, der im Backend integriert ist, wobei der Basisdienst die oben beschriebene Zuordnungstabelle enthält und/oder wobei der Basisdienst Zugriff auf die oben beschriebene Zuordnungstabelle hat. Für jeden Dienst oder App (des Backends und/oder eines externen Diensteanbieters), die Daten aus einer Vielzahl von Fahrzeugen benötigt, sind die Kennungen von vorhanden Diensten oder Apps einer Vielzahl von Fahrzeugen nach einer erfolgreichen Registrierung bekannt. Mittels der zugewiesenen Kennungen können spezifische Daten jeder Datenanwendung (z.B. Temperatur-, Regen- und/oder Lichtwerte) jedes Fahrzeuges bis auf die Positionsdaten des Fahrzeuges nur mittels des vorgesehenen Basisdienstes oder -app (der/die im Backend integriert ist) von den Diensten oder Apps jedes Fahrzeugs (nicht gezeigt) angefordert und bekommen werden derart, dass die Quelle (welches Fahrzeug) der Daten anonym bleibt. Alternativ oder ergänzend kann ein Dienst eines externen Diensteanbieters unmittelbar mit dem im Backend vorgesehenen Basisdienst oder-app kommunizieren. Auf diese Weise kann die Anforderung und Übertragung von den spezifischen Daten des Fahrzeuges unmittelbar zwischen jedem Dienst oder App und der Basis- und oder Datenanwendung jedes Fahrzeuges erfolgen, vorausgesetzt, dass die Daten anonymisiert werden, bevor sie übertragen werden.

Die Positionsdaten eines spezifischen Fahrzeugs kann ein Dienst oder App des Backends und/oder eines externen Diensteanbieters nur mittels des/der vorgesehenen Basisdienstes oder -app, der im Backend integriert ist, zugreifen. Die Anforderung an den vorgesehenen Basisdienst oder-app, der im Backend integriert ist, erfolgt durch die Verwendung der Kennung einer Datenanwendung. Dadurch kann der vorgesehene Basisdienst oder -app, der im Backend integriert ist, durch die Zuordnungstabelle die entsprechenden Positionsdaten des spezifischen Fahrzeugs zukommen lassen, dessen Datenanwendung mit der angegebenen Kennung registriert ist. Alternativ oder ergänzend kann die Anforderung an den vorgesehenen Basisdienst oder -app, der im Backend integriert ist, durch die Verwendung der Identifikation (ID) des spezifischen Fahrzeug erfolgen. Dies setzt voraus, dass jeder Dienst auch die Identifikation (ID) jedes Fahrzeug zusammen mit den angeforderten Daten bekommt. Auf jeden Fall bleibt die Quelle der Daten (d.h. das jeweilige Fahrzeug) anonym.

Die Positionsdaten jedes Fahrzeuges können durch den/die Basisdienst oder -app jedes Fahrzeuges an den Basisdienst oder -app des Backends übertragen werden. Auf dieser Weise erfolgt erfindungsgemäß, dass die Positionsdaten eines Fahrzeuges nicht von jedem Dienst oder App des Fahrzeuges übertragen werden, sondern nur einmal durch den/die Basisdienst oder -app des Fahrzeuges. Dies ermöglicht einerseits eine Verbesserung in der Zuordnung der Daten - nur ein bestimmter Satz von Positionsdaten für jedes spezifischen Fahrzeug mit einer vordefinierten Genauigkeit wird geschickt - und andererseits eine effiziente Übertragung von Daten - jeder Dienst oder App eines Fahrzeuges schickt nur Daten die spezifisch zu dem Dienst oder App einbezogen sind, wie Temperatur-, Regen- und/oder Lichtwerte für z.B. eine Wetterapp. Die Übertragung von den Positionsdaten des Fahrzeugs per Dienst oder App des Fahrzeugs ist dagegen redundant und soll erfindungsgemäß vermieden werden.

Erfindungsgemäß ist Datenschutz und Datensparsamkeit unabhängig von der steigenden Anzahl von Anwendungen, Diensten und Apps gewährleistet.

Anzumerken ist, dass die gezeigten Schritte in den oben genannten Figuren nur zu Illustrationszwecken dienen und, dass die gezeigten Schritte in den oben genannten Figuren gleichzeitig oder in einer anderen Reihenfolge als gezeigt ausgeführt werden können.

Es ist darüber hinaus für den Fachmann ersichtlich, dass mehrere Implementierungen und Ausführungsformen als die oben beschriebenen Ausführungsformen unter dem Schutzbereich der beigefügten Patentansprüche fallen.

### Bezugszeichenliste

- 190: Datenempfänger: bspw. Lichtsensor, Regensensor, GPS Receiver
- 100: Fahrzeug 1
- 100a: Wetter App/Dienst
- 100z: Verkehrsinformation App/Dienst
- 110: Basisdienst/App im Fahrzeug 100
- 120: Kommunikationsschnittstelle im Fahrzeug 100
- 300: Backend
- 300a: Wetterkartendienst
- 300z: Verkehrsinformationsdienst
- 310: Basisdienst/App im Backend 300
- 320: Kommunikationsschnittstelle im Backend
- 200: Fahrzeug 2
- 200a: Wetter App/Dienst
- 200z: Verkehrsinformation App/Dienst
- 210: Basisdienst/App im Fahrzeug 200
- 220: Kommunikationsschnittstelle im Fahrzeug 200

## Patentansprüche

1. Verfahren zur Steuerung von Daten eines Fahrzeuges,
wobei das Fahrzeug eine Kommunikationseinheit, einen ersten Datenempfänger, einen zweiten Datenempfänger, eine Basisanwendung und mindestens eine Datenanwendung umfasst, wobei das Fahrzeug mit einer Identifikation bezeichnet wird,
wobei das Verfahren umfasst:
Anfordern von Daten von der mindestens einen Datenanwendung hinsichtlich einer konkreten Position,
Erfassen von Basisdaten des Fahrzeuges mittels des ersten Datenempfängers,
Übertragen der Basisdaten des Fahrzeuges an die Basisanwendung,
Kodieren der Identifikation des Fahrzeugs;
Übertragen der Basisdaten mit der kodierten Identifikation des Fahrzeugs über die Kommunikationseinheit an einen Basisdienst eines Backends (300),
Erfassen der angeforderten Daten mittels des zweiten Datenempfängers,
Übertragen der angeforderten Daten an die mindestens eine Datenanwendung,
Zuweisen einer Kennung für die mindestens eine Datenanwendung;
Übertragen einen der angeforderten Daten mit der zugewiesenen Kennung der mindestens einen Datenanwendung über die Kommunikationseinheit an einen ersten Dienst und wobei die Kennung der mindestens einen Datenanwendung und die kodierte Identifikation des Fahrzeugs eine Anonymisierung der zu übertragenden angeforderten Daten ermöglicht.

2. Verfahren nach Anspruch 1, wobei das Anfordern von Daten an die mindestens eine Datenanwendung auf Antrag des ersten Diensts an den Basisdienst des Backends (300) erfolgt und wobei das Anfordern Vorgaben an die Genauigkeit und/oder an die Übertragung von den angeforderten Daten umfasst und/oder Vorgaben an die Genauigkeit und/oder an die Übertragung von den Basisdaten umfasst, und wobei die angeforderten Daten und/oder die Basisdaten nach den angeforderten Vorgaben erfassen und/oder übertragen werden.

3. Verfahren nach Anspruch 1, wobei der erste Datenempfänger einen GPS Empfänger ist und wobei die Basisdaten Positionsdaten sind, und wobei das Verfahren weiter umfasst: Bestimmen anhand der erfassten Basisdaten des Fahrzeuges, dass das Fahrzeug sich innerhalb eines vordefinierten Bereichs in Bezug auf die konkrete Position befindet, und wobei das Anfordern von Daten an die mindestens eine Datenanwendung nur erfolgt, wenn bestimmt wird, aufgrund der erfassten Basisdaten des Fahrzeuges, dass das Fahrzeug sich innerhalb des vordefinierten Bereichs in Bezug auf die konkrete Position befindet.

4. Verfahren nach Anspruch 3, wobei das Übertragen von Basisdaten an die Basisanwendung des Fahrzeuges nur erfolgt, wenn bestimmt wird, aufgrund der erfassten Basisdaten des Fahrzeuges, dass das Fahrzeug sich innerhalb des vordefinierten Bereichs in Bezug auf die konkrete Position befindet.

5. Verfahren nach Anspruch 3, wobei das Erfassen von Daten mittels des zweiten Datenempfängers nur erfolgt, wenn bestimmt wird, aufgrund der erfassten Basisdaten des Fahrzeuges, dass das Fahrzeug sich innerhalb des vordefinierten Bereichs in Bezug auf die konkrete Position befindet.

6. Verfahren nach Anspruch 1, wobei das Verfahren ein Registrieren der mindestens einen Datenanwendung mit dem Basisdienst des Backends (300) umfasst und wobei das Übertragen der angeforderten Daten mit der zugewiesenen Kennung der mindestens einen Datenanwendung über eine Kommunikationseinheit an einen ersten Dienst nur mittels des Basisdiensts des Backends (300) erfolgt.

7. Verfahren nach Anspruch 1, wobei das Erfassen von angeforderten Daten mittels des zweiten Datenempfängers und/oder das Erfassen von Basisdaten mittels des ersten Datenempfängers periodisch erfolgt.

8. Verfahren nach Anspruch 1, wobei das Übertragen der Daten des zweiten Datenempfängers an die mindestens eine Datenanwendung und/oder das Übertragen von den Basisdaten des ersten Datenempfängers an die Basisanwendung periodisch erfolgt.

9. Verfahren nach Anspruch 1, wobei das Übertragen der angeforderten Daten eines Fahrzeuges an das Backend (300) periodisch erfolgt.

10. Verfahren nach Anspruch 1, wobei die Daten aus einer Vielzahl von Fahrzeugen zu steuern sind und wobei jedes Fahrzeug aus der Vielzahl von Fahrzeugen mindestens eine Kommunikationseinheit, einen ersten Datenempfänger, einen zweiten Datenempfänger, eine Datenanwendung und eine Basisanwendung umfasst.

## Claims

1. Method for controlling data relating to a vehicle, the vehicle comprising a communication unit, a first data receiver, a second data receiver, a basic application and at least one data application, the vehicle being identified with an identification, the method comprising: requesting data from the at least one data application with regard to a specific position, acquiring basic data relating to the vehicle by means of the first data receiver, transmitting the basic data relating to the vehicle to the basic application, coding the identification of the vehicle; transmitting the basic data containing the coded identification of the vehicle to a basic service of a backend (300) via the communication unit, acquiring the requested data by means of the second data receiver, transmitting the requested data to the at least one data application, allocating the at least one data application using an identifier; transmitting the requested data with the allocated identifier of the at least one data application to a first service via the communication unit, and the identifier of the at least one data application and the coded identification of the vehicle making it possible to anonymize the requested data to be transmitted.

2. Method according to Claim 1, the request for data from the at least one data application being made from the basic service of the backend (300) at the request of the first service, and the request comprising specifications for the accuracy and/or the transmission of the requested data and/or specifications for the accuracy and/or the transmission of the basic data, and the requested data and/or the basic data being acquired and/or transmitted according to the requested specifications.

3. Method according to Claim 1, the first data receiver being a GPS receiver, and the basic data being position data, and the method also comprising: determining, on the basis of the acquired basic data relating to the vehicle, that the vehicle is within a predefined region with respect to the specific position, and data being requested from the at least one data application only if it is determined, on the basis of the acquired basic data relating to the vehicle, that the vehicle is within the predefined region with respect to the specific position.

4. Method according to Claim 3, basic data being transmitted to the basic application of the vehicle only if it is determined, on the basis of the acquired basic data relating to the vehicle, that the vehicle is within the predefined region with respect to the specific position.

5. Method according to Claim 3, data being acquired by means of the second data receiver only if it is determined, on the basis of the acquired basic data relating to the vehicle, that the vehicle is within the predefined region with respect to the specific position.

6. Method according to Claim 1, the method comprising registering the at least one data application with the basic service of the backend (300), and the requested data containing the allocated identifier of the at least one data application being transmitted to a first service via a communication unit only by means of the basic service of the backend (300).

7. Method according to Claim 1, requested data being acquired periodically by means of the second data receiver and/or basic data being acquired periodically by means of the first data receiver.

8. Method according to Claim 1, the data from the second data receiver being transmitted periodically to the at least one data application and/or the basic data from the first data receiver being transmitted periodically to the basic application.

9. Method according to Claim 1, the requested data relating to a vehicle being transmitted periodically to the backend (300).

10. Method according to Claim 1, the data from a multiplicity of vehicles needing to be controlled, and each vehicle from the multiplicity of vehicles comprising at least one communication unit, a first data receiver, a second data receiver, a data application and a basic application.

## Revendications

1. Procédé de commande des données d'un véhicule, dans lequel véhicule comprend une unité de communication, un premier récepteur de données, un second récepteur de données, une application de base et au moins une application de données, dans lequel le véhicule est désigné par une identification, dans lequel le procédé consiste à :
demander des données d'au moins une application de données concernant une position spécifique,
acquérir des données de base du véhicule au moyen du premier récepteur de données,
transmettre les données de base du véhicule à l'application de base,
coder l'identification du véhicule ;
transmettre les données de base avec l'identification codée du véhicule par l'intermédiaire de l'unité de communication à un service de base d'un système dorsal (300),
acquérir les données demandées au moyen du second récepteur de données,
transmettre les données demandées à l'au moins une application de données,
attribuer un identifiant à au moins une application de données ;
transmettre les données demandées avec l'identifiant attribué de l'au moins une application de données par l'intermédiaire de l'unité de communication à un premier service, et
dans lequel l'identifiant de l'au moins une application de données et l'identifiant codé du véhicule permettent de rendre anonymes les données demandées à transmettre.

2. Procédé selon la revendication 1, dans lequel la demande de données à l'au moins une application de données est effectuée à la demande du premier service au service de base du système dorsal (300) et dans lequel la demande comprend des spécifications concernant l'exactitude et/ou concernant la transmission des données demandées et/ou comprend des spécifications concernant l'exactitude et/ou concernant la transmission des données de base, et dans lequel les données demandées et/ou les données de base sont acquises et/ou transmises selon les spécifications demandées.

3. Procédé selon la revendication 1, dans lequel le premier récepteur de données est un récepteur GPS et dans lequel les données de base sont des données de position, et dans lequel le procédé comprend en outre : la détermination sur la base des données de base acquises du véhicule que le véhicule se situe dans une zone prédéfinie par rapport à la position spécifique, et dans lequel la demande de données à l'au moins une application de données n'est effectuée que s'il est déterminé, sur la base des données de base acquises du véhicule, que le véhicule se situe dans la zone prédéfinie par rapport à la position spécifique.

4. Procédé selon la revendication 3, dans lequel la transmission de données de base à l'application de base du véhicule n'est effectuée que s'il est déterminé, sur la base des données de base acquises du véhicule, que le véhicule se situe dans la zone prédéfinie par rapport à la position spécifique.

5. Procédé selon la revendication 3, dans lequel l'acquisition de données au moyen du second récepteur de données n'est effectuée que s'il est déterminé, sur la base des données de base acquises du véhicule, que le véhicule se situe dans la zone prédéfinie par rapport à la position spécifique.

6. Procédé selon la revendication 1, dans lequel le procédé comprend un enregistrement de l'au moins une application de données sur le service de base du système dorsal (300) et dans lequel la transmission des données demandées avec l'identifiant attribué de l'au moins une application de données par l'intermédiaire d'une unité de communication à un premier service n'est effectuée qu'au moyen du service de base du système dorsal (300).

7. Procédé selon la revendication 1, dans lequel l'acquisition de données demandées au moyen du second récepteur de données et/ou l'acquisition des données de base au moyen du premier récepteur de données est/sont effectuée(s) périodiquement.

8. Procédé selon la revendication 1, dans lequel la transmission des données du second récepteur de données à l'au moins une application de données et/ou la transmission des données de base du premier récepteur de données à l'application de base est effectuée périodiquement.

9. Procédé selon la revendication 1, dans lequel la transmission des données demandées d'un véhicule au système dorsal (300) est effectuée périodiquement.

10. Procédé selon la revendication 1, dans lequel les données doivent être commandées à partir d'une pluralité de véhicules et dans lequel chaque véhicule de la pluralité de véhicules comprend au moins une unité de communication, un premier récepteur de données, un second récepteur de données, une application de données et une application de base.
